# EUROPEAN PATENT APPLICATION

(11) **EP 3 892 464 A1**
(43) Date of publication of application: **13.10.2021**
(21) Application number: 19894135.3
(22) Date of filing: 22.11.2019
(51) Int. Cl.: B32B 27/20, B32B 27/36, B42D 25/23, B42D 25/24, B42D 25/41

(54) **MULTILAYER FILM FOR LASER PRINTING, MULTILAYER BODY FOR ELECTRONIC PASSPORTS, MULTILAYER BODY FOR PLASTIC CARDS, FILM FOR PLASTIC CARDS, PLASTIC CARD, DATA SHEET FOR ELECTRONIC PASSPORTS, AND ELECTRONIC PASSPORT**

(30) Priority: 03.12.2018 JP 2018226807
(71) Applicant: Mitsubishi Chemical Corporation, Chiyoda-ku Tokyo 100-8251 (JP)
(72) Inventor: HATTA, Masahiro, Tokyo 100-8251 (JP); TANAKA, Kazuya, Tokyo 100-8251 (JP)
(74) Representative: Hoffmann Eitle
(86) International application number: PCT/JP2019/045821
(87) International publication number: WO 2020/116209

(57) **Abstract**

Provided is a multilayer film for laser marking including: a layer (X) at least as an outermost layer, the layer (X) being made from a resin composition containing a bisphenol-based polycarbonate (A) and a polyester (B), the polyester (B) containing a predetermined compound as a diol component, the resin composition containing the predetermined compound in an amount of 0.1 to 20 mass%; and at least one layer (Y) made from a resin composition containing the bisphenol-based polycarbonate (A) and a laser beam energy absorber (C). The multilayer film does not contaminate equipment such as a T-die and rolls in melt extrusion molding, brings about good laser marking performance. On the multilayer film, laser-marked information does not fade even in long-term use. In the multilayer film, the base material does not deteriorate.

## Description

### [Technical field]

The present application relates to a multilayer film for laser marking which is used for ID cards, e-passports, etc., and a laminate for e-passports and a laminate for plastic cards which include the multilayer film; and relates to a film for plastic cards, and a plastic card including this film, and a data sheet for e-passports, and an e-passport including the sheet.

### [Background Art]

Activating personnel's movement accompanying developing international exchanges makes a passport in which personal information is recorded more important as a means of identifying an individual to prove the identity. Especially, a passport is playing a role of so-called identification (such as identify papers) issued by a state that is a public entity at the same time, and has reliability.

In particular, after the September 11 attacks in September 2001, a specialized agency of the United Nations, ICAO (International Civil Aviation Organization) established standards for stricter immigration and departure controls in each country, so that the introduction of an e-passport has been begun, which places importance on forgery prevention. Thus, interest in techniques of laser-marking personal names, symbols, letters, photographs, etc. has been increasing.

Such an e-passport makes it possible to identify and prove an individual. Therefore, if a third party other than states (or agencies for the state) can easily, e.g., alter or forge personal information, the reliability as identification decreases, and further, the development of international exchanges and global personnel's movement may be hindered.

An important problem with the foregoing e-passport is then how to prevent alteration or forgery. It is also important how in sharp contrast and how clear personal names, symbols, letters, photographs, etc. can be displayed since a standardized e-passport has a light, thin, short and small size. The market much expects achievement of a clear display in sharp contrast as well because achievement thereof leads to prevention of alteration, forgery, etc.

For such a problem, the technique of laser-marking personal names, symbols, letters, photographs, etc., specifically, a multilayer film for laser marking is attracting interest. However, personal names, symbols, letters, photographs, etc. marked by laser marking may fade due to ultraviolet rays, which may lead to disappearance of information for identifying an individual during long-term storage. "Fade" here means that discoloration of a base material gradually makes laser-marked information unclear. It may be difficult to use a passport for a long time according to conditions of storage or use of the passport since a polycarbonate resin that is generally used as a base material for passports to be laser-marked in view of heat resistance and impact resistance easily deteriorates due to ultraviolet rays.

A well-known method for solving such a problem is a method of adding a benzophenone-type ultraviolet absorber, a benzotriazole-type ultraviolet absorber, or a triazine-type ultraviolet absorber to a polycarbonate resin which is disclosed in Patent Literatures 1 and 2 and Non Patent Literature 1. Patent Literature 3 discloses a film for laser marking where such an ultraviolet absorber is formulated.

Patent Literature 4 discloses the structure and production method on a passport.

### [Citation List]

### [Patent Literature]

[PTL 1] JP H6-64123 A
[PTL 2] JP H10-17556 A
[PTL 3] JP 2018-0591101 A
[PTL 4] JP 5367945 2 B2
[PTL 5] JP 3845213 3 B

### [Non Patent Literature]

[NPL 1] Honma, Seiichi ed. (August 28, 1992). Porikabonetojyushi-Handobukku. THE NIKKAN KOGYO SHIMBUN, LTD.

### [Summary of invention]

### [Technical Problem]

When an ultraviolet absorber is added to a polycarbonate resin as disclosed in the above literatures, improvements in hues etc. after ultraviolet irradiation are recognized, but, for example, as described in Patent Literature 5, a T-die, rolls, etc. are contaminated by volatiles of the ultraviolet absorber in melt extrusion molding, which is problematic.

Addition of an ultraviolet absorber to a polycarbonate resin containing a laser beam energy absorber results in a poor laser marking performance to bring about an unclear display, which is also problematic.

An object of the present application is to solve the foregoing problems to provide a multilayer film for laser marking which does not contaminate equipment such as a T-die and rolls in melt extrusion molding, and brings about good laser marking performance, and where laser-marked information does not fade (due to discoloration of a base material) even in long-term use, and the base material does not deteriorate.

### [Solution to Problem]

As a result of their intensive research to solve the foregoing problems, the inventors of the present invention have found that the foregoing problem can be solved, and then completed the following.

The present application discloses, as a first embodiment, a multilayer film for laser marking, the multilayer film comprising: a layer (X) at least as an outermost layer, the layer (X) being made from a resin composition, the resin composition containing a bisphenol-based polycarbonate (A) and a polyester (B), the polyester (B) containing a compound of the following general formula (1) as a diol component, the resin composition containing the compound of the following general formula (1) in an amount of 0.1 to 20 mass%; and at least one layer (Y) made from a resin composition, the resin composition containing the bisphenol-based polycarbonate (A) and a laser beam energy absorber (C).

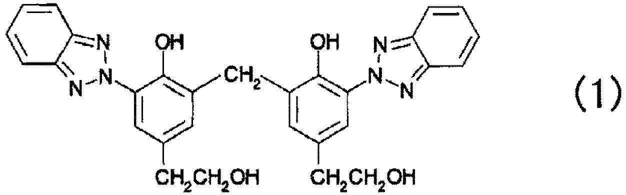

In the first embodiment, the polyester (B) preferably contains an aromatic dicarboxylic acid as a major constituent of a dicarboxylic acid component in the polyester (B), and 1,4-butanediol in an amount of 50 mol% to 95 mol% on the basis of the total diol component.

In the first embodiment, the layer (X) preferably contains a transesterification inhibitor.

The present application discloses, as a second embodiment, a laminate for e-passports comprising the multilayer film for laser marking according to the first embodiment.

The present application discloses, as a third embodiment, a laminate for plastic cards comprising the multilayer film for laser marking according to the first embodiment.

The present application discloses, as a fourth embodiment, a film for plastic cards, the film comprising: a layer (X) at least as an outermost layer, the layer (X) being made from a resin composition, the resin composition containing a bisphenol-based polycarbonate (A) and a polyester copolymer (B), the polyester copolymer (B) including a UV absorbent group; and at least one layer (Y) made from a resin composition, the resin composition containing the bisphenol-based polycarbonate (A) and a laser beam energy absorber (C).

The present application discloses, as a fifth embodiment, a plastic card comprising the film for plastic cards according to the fourth embodiment.

The present application discloses, as a sixth embodiment, a data sheet for e-passports, the data sheet comprising: at least one layer (X) made from a resin composition, the resin composition containing a bisphenol-based polycarbonate (A) and a polyester copolymer (B), the polyester copolymer (B) including a UV absorbent group; at least one layer (Y) made from a resin composition, the resin composition containing the bisphenol-based polycarbonate (A) and a laser beam energy absorber (C); and a hinge sheet layer (Z).

The present application discloses, as a seventh embodiment, an e-passport comprising the data sheet for e-passports according to the sixth embodiment.

### [Advantageous Effects of Invention]

The multilayer film for laser marking according to the present disclosure brings about laser marking performance without deterioration due to an ultraviolet absorber, and gives a maintained effect of absorbing ultraviolet rays, which make it possible to suppress fading of laser-marked personal names, symbols, letters and photographs (due to discoloration of a base material), and deterioration of the base material due to ultraviolet rays for a long time. This multilayer film can also suppress contamination of equipment in melt extrusion molding which is caused by volatilization of an ultraviolet absorber.

### [Brief Description of Drawings]

Figs. 1A and 1B are both schematic views showing the structure of the layers of a laminate for e-passports (data sheet for e-passports); and
Figs. 2A and 2B are both schematic views showing the structure of the layers of a laminate for plastic cards (plastic card).

### [Description of Embodiments]

Hereinafter, a multilayer film for laser marking, a laminate for e-passports, a laminate for plastic cards, a film for plastic cards, a plastic card, a data sheet for e-passports, and an e-passport according to the present disclosure will be described. The contents of the present application are not limited to the embodiments described below.

### <Multilayer film for laser marking>

Preferably, the multilayer film for laser marking according to the present disclosure includes: a layer (X) at least as an outermost layer, the layer (X) being made from a resin composition (x) containing a bisphenol-based polycarbonate (A) and a polyester (B) containing a compound of the following general formula (1) as a diol component, the resin composition (x) containing the compound of the following general formula (1) in an amount of 0.1 to 20 mass%; and at least one layer (Y) made from a resin composition (y) containing the bisphenol-based polycarbonate (A) and a laser beam energy absorber (C).

The multilayer film according to the present disclosure including the layer (X) at least as an outermost layer thereof can suppress not only fading of the layer (Y) which laser marking is subjected to, and deterioration of the bisphenol-based polycarbonate in the layers (X) and (Y) due to ultraviolet rays, but also surface roughening due to foaming on a marked portion in laser marking, to suppress lowering of a contrast.

Here, the "diol component" of "containing a compound of the following general formula (1) as a diol component" means a diol component with which a dicarboxylic acid component forming the polyester (B) is polycondensed, and does not strictly mean that this component is a diol. Therefore, the compound of the formula (1) is a tetrol, but is regarded as a diol component according to the above meaning.

"Containing a compound of the following general formula (1) in an amount of 0.1 to 20 mass%" means that residues from the polycondensation of the compound of the formula (1) in an amount (mass%) within the foregoing range are present in the polyester (B).

### <Layer (X)>

The resin composition (x) constituting the layer (X) of the multilayer film for laser marking according to the present disclosure is a resin composition having the bisphenol-based polycarbonate (A) and the polyester (B) containing the compound of the following general formula (1) as a diol component, the resin composition (x) containing the compound of the following general formula (1) in an amount of 0.1 to 20 mass%.

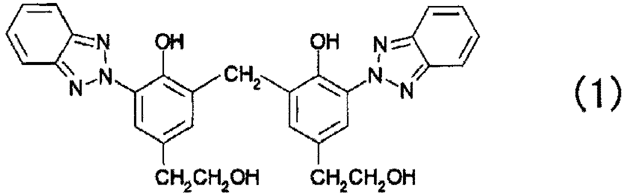

A conventionally known method for giving the bisphenol-based polycarbonate (A) UV absorbance is a method of adding an ultraviolet absorber. In this method however, equipment such as a T-die and rolls is contaminated by volatiles of the ultraviolet absorber in melt extrusion molding, which is problematic.

For the present application, it was found that not only the bisphenol-based polycarbonate (A) and the specific polyester (B) are miscible with each other in the resin composition, which results in excellent UV absorbance, but also the layer (X) containing an ultraviolet absorbing material and the layer (Y) containing the laser beam energy absorber are separated from each other, which prevents laser marking performance from lowering. The film obtained from the foregoing resin compositions is also applicable to any uses requiring optical properties because not contaminating equipment in melt extrusion molding, and having excellent UV absorbance and mechanical properties.

### (Bisphenol-based polycarbonate (A))

The bisphenol-based polycarbonate (A) included in the resin composition (x) is such that at least 50 mol%, preferably at least 70 mol%, and preferably at least 90 mol% of the structural unit derived from a diol is bisphenol.

The bisphenol-based polycarbonate (A) may be either a homopolymer or a copolymer. The bisphenol-based polycarbonate (A) may have a branching structure, or may have a linear chain structure, or may be any mixture of a branching structure and a linear chain structure.

Any known method such as the phosgene method, the transesterification method and the pyridine method may be used as the method of producing the bisphenol-based polycarbonate (A), which is used in the present application. As an example, the method of producing a polycarbonate resin by the transesterification method will be described below.

The transesterification method is a production method of adding bisphenol and a carbonate diester to a basic catalyst, and further adding an acidic substance that neutralizes this basic catalyst, to perform melt transesterification polycondensation.

As a typical example of bisphenol, 2,2-bis(4-hydroxyphenyl)propane, that is, bisphenol A is preferably used. Part or the entire of bisphenol A may be replaced with any other bisphenol.

Specific examples of bisphenol include 2,2-bis(4-hydroxyphenyl)propane (bisphenol A), 1,1-bis(4-hydroxyphenyl)-1-phenylethane (bisphenol AP), 2,2-bis(4-hydroxyphenyl)hexafluoropropane (bisphenol AF), 2,2-bis(4-hydroxyphenyl)butane (bisphenol B), bis(4-hydroxyphenyl)diphenylmethane (bisphenol BP), 2,2-bis(3-methyl 4-hydroxyphenyl)propane (bisphenol C), 1,1-bis(4-hydroxyphenyl)ethane(bisphenol E), 2,2-bis(4-hydroxy-3-isopropylphenyl)propane (bisphenol G), 1,3-bis(2-(4-hydroxyphenyl)-2-propyl)benzene (bisphenol M), bis(4-hydroxyphenyl)sulfone (bisphenol S), 1,4-bis(2-(4-hydroxyphenyl)-2-propyl)benzene (bisphenol P), 5,5'-(1-methylethylidene)-bis[1,1'-(bisphenyl)-2-ol]propane (bisphenol PH), 1,1-bis(4-hydroxyphenyl)3,3,5-trimethylcyclohexane (bisphenol TMC), and 1,1-bis(4-hydroxyphenyl)cyclohexane (bisphenol Z).

Typical examples of carbonate diesters include diphenyl carbonate, ditolyl carbonate, bis(chlorophenyl) carbonate, m-cresyl carbonate, dinaphthyl carbonate, bis(biphenyl) carbonate, diethyl carbonate, dimethyl carbonate, dibutyl carbonate, and dicyclohexyl carbonate. Among them, diphenyl carbonate is particularly preferably used.

The weight average molecular weight of the bisphenol-based polycarbonate (A) used in the present application is usually 10,000 to 100,000, and preferably 30,000 to 80,000 in view of a balance between mechanical properties and moldability. In the present application, only one bisphenol-based polycarbonate may be used alone, or two or more bisphenol-based polycarbonates may be used in combination as the bisphenol-based polycarbonate (A).

### (Polyester (B))

The polyester (B) included in the resin composition (x) is a polyester containing the compound of the following general formula (1) as a diol component. The resin composition (x) has UV absorbance since this polyester (B) has a benzotriazole group.

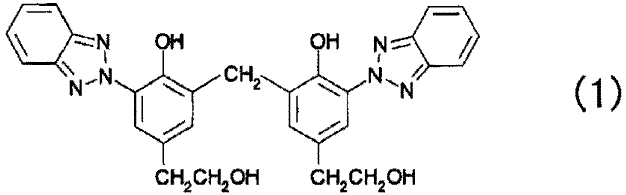

The content of the compound represented by the above general formula (1), which has benzotriazole, is preferably 5 to 20 mol% on the basis of the total diol component. When this content is at least 5 mol%, sufficient UV absorbance can be given to the film. When this content is at most 20 mol%, the mechanical strength of the film can be improved.

The content of the compound of the formula (1), which has benzotriazole, within the foregoing range leads to miscibility and transparency of the resin composition (x) obtained by mixing the bisphenol-based polycarbonate (A) and the polyester (B).

The dicarboxylic acid component and the diol component forming the polyester (B) will be described in detail. Preferably, the polyester (B) contains an aromatic dicarboxylic acid as a major constituent of the dicarboxylic acid component, and contains 1,4-butanediol in an amount of 50 mol% to 95 mol% on the basis of the total diol component.

The major constituent of the dicarboxylic acid component forming the polyester (B) is an aromatic dicarboxylic acid. Here, the major constituent means that at least 90 mol%, preferably at least 92 mol%, preferably at least 95 mol%, and preferably all (100 mol%) of the dicarboxylic acid component is an aromatic dicarboxylic acid.

Examples of an aromatic dicarboxylic acid include terephthalic acid, isophthalic acid, phthalic acid, 2,6-naphthalenedicarboxylic acid, 2,7-naphthalenedicarboxylic acid, 1,5-naphthalenedicarboxylic acid, and 1,4-naphthalenedicarboxylic acid. One of these aromatic dicarboxylic acids may be used alone, or two or more thereof may be used in combination as necessary.

Among them, terephthalic acid may be most preferably used in view of transparency of the resin composition to be obtained. Preferably at least 90 mol%, preferably at least 92 mol%, preferably at least 95 mol%, and preferably all (100 mol%) of the dicarboxylic acid component is terephthalic acid.

Examples of dicarboxylic acids other than aromatic dicarboxylic acids include aliphatic carboxylic acids such as succinic acid, adipic acid, and sebacic acid. These dicarboxylic acids may be used in an amount of less than 5 mol% on the basis of the total dicarboxylic acid component. One dicarboxylic acid may be used alone, or two or more of dicarboxylic acids may be used in combination as necessary.

The polyester (B) preferably contains 1,4-butanediol as a diol component other than the compound represented by the general formula (1) which is described above. The content of 1,4-butanediol is preferably 50 mol% to 95 mol%, and preferably 60 to 95 mol%, on the basis of the total diol component. When the content of 1,4-butanediol is less than 50 mol%, it is concerned that the resin may be colored.

Examples of diol components other than 1,4-butanediol include 1,3-propanediol, 1,2-butanediol, 1,6-hexanediol, neopentyl glycol, 2-butyl-2-ethyl-1,3-propanediol, 1,4-cyclohexanedimethanol, and diethylene glycol. One of them may be used alone, or two or more of them may be used in combination as necessary.

The method of producing the polyester (B) is not particularly limited, and can be carried out according to any known method.

### (Resin composition (x))

The composition ratio (mass ratio) of the bisphenol-based polycarbonate (A) and the polyester (B) in the resin composition (x) is not particularly limited as long as the compound represented by the general formula (1) is contained in an amount of 0.1 to 20% mass%. In order not to deteriorate the heat resistance of the bisphenol-based polycarbonate (A), the proportion of the incorporated polyester (B) is preferably within the range of 1 to 45 mass%, preferably within the range of 3 to 40 mass%, and preferably within the range of 5 to 35 mass%, on the basis of the resin composition (x). The proportion of the incorporated polyester (B) within such a range, and the proportion of the compound represented by the general formula (1) within the range of 0.1 to 20 mass% lead to the resin composition (x) excellent in heat resistance and UV absorbance.

The resin composition (x) contains the compound represented by the general formula (1) in an amount of 0.1 to 20 mass% on the basis of the resin composition (x) (100 mass%). The lower limit of the content is preferably at least 0.5 mass%, preferably at least 1 mass%, preferably at least 5 mass%, and preferably at least 7 mass%. The upper limit of the content is preferably at most 20 mass%, preferably at most 18 mass%, and preferably at most 15 mass%. When the content is at least 0.1 mass%, the UV absorbance of the resin composition (x) is excellent. When the content is at most 20 mass%, the heat resistance is good.

The content of the compound represented by the general formula (1) is calculated from the mass ratio of the polyester (B) in the resin composition (x) forming the layer (X), and the mass ratio of the polymerized unit of the compound of the formula (1) in the polyester (B). Since the compound of the formula (1) is present in the polyester (B) in a polycondensed state, the mass ratio of the polymerized unit of the compound of the formula (1) is calculated as this fact is taken into account.

Preferably, the resin composition (x) further contains a transesterification inhibitor in view of suppression of sheet foaming due to hydrolysis. As a transesterification inhibitor, for example, a phenolic antioxidant, a phosphoric antioxidant, or a sulfuric antioxidant may be used. Examples of phosphoric antioxidants include alkyl acid phosphates.

A transesterification inhibitor is preferably contained in an amount of 0.01 to 1 mass%, and preferably 0.04 to 0.5 mass%, on the basis of the resin composition (x) (100 mass%).

### <Layer (Y)>

The resin composition (y) constituting the layer (Y) of the multilayer film for laser marking according to the present disclosure is a resin composition containing the bisphenol-based polycarbonate (A) and the laser beam energy absorber (C).

### (Bisphenol-based polycarbonate (A))

The bisphenol-based polycarbonate (A) in the resin composition (y) constituting the layer (Y) is the same as the bisphenol-based polycarbonate (A) in the layer (X).

### (Laser beam energy absorber (C))

Preferably, the laser beam energy absorber (C) is incorporated into the bisphenol-based polycarbonate (A) in the resin composition (y) constituting the layer (Y). The proportion of the incorporated laser beam energy absorber (C) is preferably 0.0005 to 1 mass% on the basis of the resin composition (y) constituting the layer (Y). The proportion of the incorporated laser beam energy absorber (C) within such a range leads to excellent chromogenicity in laser marking, and a sharp contrast between a base color and marked parts, so that clear letters, symbols and images are obtained. The lower limit of the proportion of the incorporated laser beam energy absorber (C) is preferably at least 0.0007 mass%, and preferably at least 0.001 mass%. The upper limit is preferably at most 0.9 mass%, and preferably at most 0.8 mass%.

As the laser beam energy absorber, at least one selected from the group consisting of carbon black, titanium black, metal oxides, composite metal oxides, metal sulfides, metal nitrides, metal oxalates and metal carbonates is given. In order to maintain the transparency of the bisphenol-based polycarbonate (A), the average particle diameter of the laser beam energy absorber is preferably within the range of 10 nm to 10 µm. This average particle diameter within such a range can give excellent laser marking performance. The lower limit of the average particle diameter of the laser beam energy absorber is preferably at least 15 nm, and preferably at least 20 nm.

The upper limit is preferably at most 5 µm, and preferably at most 3 µm.

Specific examples of a metal oxide used as the laser beam energy absorber include zinc oxide, magnesium oxide, aluminum oxide, iron oxide, titanium dioxide, silicon dioxide, antimony trioxide, tin oxide, copper oxide, manganese dioxide, cobalt oxide, vanadium oxide, bismuth oxide, molybdenum oxide, ruthenium oxide, tungsten oxide, palladium oxide and silver oxide. As a composite metal oxide, ITO, ATO, AZO, a bismuth-neodymium metal oxide, or the like can be given. Specific examples of a metal sulfide include zinc sulfide and cadmium sulfide. Examples of a metal nitride include titanium nitride. Examples of metal oxalates include magnesium oxalate and copper oxalate. Examples of metal carbonates include basic copper carbonate. Among them, in view of chromogenicity, preferably, carbon black, a metal oxide or a composite metal oxide is used alone or they are used in combination.

In the present application, the resin composition (x) and the resin composition (y) are allowed to include any resin other than the bisphenol-based polycarbonate (A) and the polyester (B) as long as the effect of the multilayer film according to the present disclosure is not ruined.

As such other resins, polystyrene-based resins, polyvinyl chloride-based resins, polyvinylidene chloride-based resins, chlorinated polyethylene-based resins, polyester-based resins different from the polyester (B), polyamide-based resins, polyacetal-based resins, acrylic resins, ethylene vinyl acetate copolymers, polymethylpentene-based resins, polyvinyl alcohol-based resins, cyclic olefin-based resins, polylactic acid-based resins, polybutylene succinate-based resins, polyacrylonitrile-based resins, polyethylene oxide-based resins, cellulose-based resins, polyimide-based resins, polyurethane-based resins, polyphenylene sulfide-based resins, polyphenylene ether-based resins, polyvinyl acetal-based resins, polybutadiene-based resins, polybutene-based resins, polyamideimide-based resins, polyamide bismaleimide-based resins, polyetherimide-based resins, polyether ether ketone-based resins, polyetherketone-based resins, polyethersulfone-based resins, polyketone-based resins, polysulfone-based resins, aramid-based resins, fluorine-based resins, etc. are given.

In the present application, the resin composition (x) and the resin composition (y) may suitably include generally incorporated additives in addition to the foregoing constituents as long as the effect of the multilayer film according to the present disclosure is not greatly inhibited. As such additives, recycled resins generated from loss of trimmings etc., inorganic particles such as silica, talc, kaolin and calcium carbonate, pigments such as titanium oxide and carbon black, additives such as flame retardants, weathering stabilizers, heat stabilizers, antistatic agents, melt viscosity modifiers, crosslinking agents, glidant, nucleating agents, plasticizers, antioxidants, neutralizing agents, antifogging agents, anti-blocking agents, slip agents, and colorants which are added for the purpose of improving and adjusting moldability, productivity, and various physical properties of a porous film, are given.

The resin composition (y) constituting the layer (Y) may contain an ultraviolet protector. When the resin composition (y) contains an ultraviolet protector, the content thereof is preferably at most 0.7 mass%, and preferably at most 0.5 mass%, on the basis of the resin composition (y) (as 100 mass%). The resin composition (y) containing an ultraviolet protector in an amount of at most 0.7 mass% may prevent laser chromogenicity from deteriorating.

The ratio of the proportion of an ultraviolet absorber contained in the layer (Y) (mass%) to the proportion of the compound of the general formula (1) contained in the layer (X) (mass%), that is, "ultraviolet absorber in the layer (Y) (mass%)"/"compound of the general formula (1) in the layer (X) (mass%)" is preferably at most 0.78, and preferably at most 0.56.

### <Method of molding multilayer film for laser marking>

Examples of the method of molding the multilayer film for laser marking according to the present disclosure include a method of carrying out melt extrusion molding on a resin composition constituting each layer so that the compositions have desired thicknesses, and layering the compositions; a method of forming each layer in the form of a film having a desired thickness, and laminating the layers; and a method of carrying out melt extrusion to form a plurality of layers, and laminating a separately formed film onto the layers. Among these, in view of productivity and cost, the method of melt extrusion molding and then layering is preferable.

Specifically, resin compositions constituting layers are respectively prepared, or pelletized as necessary, to be put into hoppers of a multilayer T-die extruder to which a common T-die is linked.

Further, melting is performed at a temperature ranging from 200 to 300°C, to carry out multilayer T-die melt extrusion molding. Next, cooling and solidification are performed at cooling rolls or the like. This makes it possible to form a multilayer film. The multilayer film for laser marking according to the present disclosure can be formed by any known method but is not limitedly formed by any of the above methods.

There is no particular limitation on the thickness of the multilayer film for laser marking according to the present disclosure, but the thickness of the layer (X) is preferably 1 to 50 µm. The thickness of the layer (X) within such a range makes it possible to suppress fading of laser-marked personal names, symbols, letters and photographs (due to discoloration of a base material), and deterioration of the base material due to ultraviolet rays for a long time. The lower limit of the thickness of the layer (X) is preferably at least 2 µm, and preferably at least 3 µm. The upper limit is preferably at most 45 µm, and preferably at most 40 µm.

The thickness of the layer (Y) is preferably 10 to 200 µm. The thickness of the layer (Y) within such a range can lead to laser marking excellent in chromogenicity. The lower limit of the thickness of the layer (Y) is preferably at least 20 µm, and preferably at least 30 µm. The upper limit is preferably at most 180 µm, and preferably at most 160 µm.

### <Laser marking method>

The multilayer film for laser marking according to this disclosure is irradiated with laser beam energy to develop colors. As laser beam energy, gas lasers such as He-Ne lasers, Ar lasers, CO₂ lasers and excimer lasers, solid-state lasers such as YAG lasers and Nd:YVO₄ lasers, semiconductor lasers, and dye lasers are given. Among them, YAG lasers and Nd:YVO₄ lasers are preferable.

The laser beam may be in a single mode, or may be in a multi mode. Not only a laser beam having a narrowed beam diameter such as 20-40 µm, but also a laser beam having a wide beam diameter such as 80-100 µm may be used. A single mode laser beam having a beam diameter of 20-40 µm is preferable because capable of making the contrast between marked and color-developed parts and the base at least three, to offer a marking quality with a clear contrast.

Since being excellent in laser marking performance and weather resistance, the multilayer film for laser marking according to the present disclosure may be preferably used as a surface material of ID cards and e-passports.

### <Laminate for e-passports>

The laminate for e-passports according to the present disclosure includes the foregoing multilayer film for laser marking. The laminate for e-passports according to the present disclosure preferably includes the multilayer film for laser marking as a surface material.

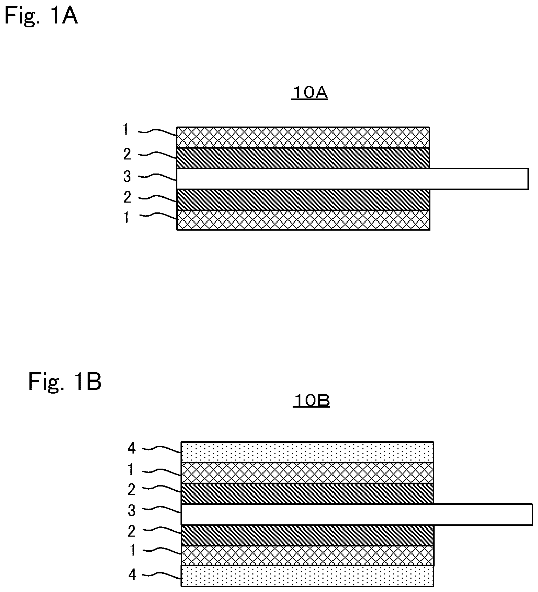

As the structure of the laminate for e-passports, specifically, a five-layer laminate 10A formed of multilayer film for laser marking 1/sheet for a core 2/hinge sheet 3/sheet for a core 2/multilayer film for laser marking 1 shown in Fig. 1A, or a seven-layer laminate 10B formed of protective layer 4/multilayer film for laser marking 1/sheet for a core 2/hinge sheet 3/sheet for a core 2/multilayer film for laser marking 1/protective layer 4 shown in Fig. 1B is preferable.

At least one sheet is layered by melt extrusion molding, to form the sheet for a core 2. The major constituent of the sheet for a core 2 is a polycarbonate resin. The sheet for a core 2 contains at least 1 mass% of a colorant on the basis of the polycarbonate resin as 100 mass%. The total thickness of the sheet for a core 2 is preferably 50 to 200 µm. As the colorant in the sheet for a core, titanium oxide, barium oxide and zinc oxide as a white pigment, iron oxide and titanium yellow as a yellow pigment, iron oxide as a red pigment, and cobalt blue and ultramarine as a blue pigment are given. In order to enhance the contrast, a pigment having a pale coloring or a light-colored pigment is preferable. Among the foregoing colorants, a colorant for resins such as white dye and pigment which lead to a sharp contrast is more preferably added.

The hinge sheet 3 in the laminate for e-passports is a sheet playing a role in order that a cover, other visa pages, etc. of a passport with which the following are integrated are firmly bound: (1) letters, figures, symbols, or information written in the multi-layer film for laser marking by laser marking; (2) information such as images and letters marked on the sheet for a core by marking or the like; and (3) various pieces of information stored in a storage medium such as an IC chip which is disposed in a so-called inlet sheet that is a sheet in which, for example, a storage medium such as an IC chip storing various pieces of information etc. is disposed (the inlet sheet is arranged as the sheet for a core 2). Therefore, rigid heat fusibility, suitable flexibility, heat resistance in a heat fusing step, etc. are necessary. For example, when bound to a cover (of a passport) or the like using a sewing machine, this hinge sheet 3 may be required to have excellent tear and tensile strength at a portion thereof bound using the sewing machine, and lightfastness and heat resistance at a hinge portion thereof. The hinge sheet 3 may be further required to be excellent in resistance to repeated bending, in other words, in hinge properties. Therefore, any of the following materials is preferably used as the hinge sheet 3 matching such purposes.

The hinge sheet 3 playing such a role is preferably made as a sheet formed of at least one selected from a thermoplastic polyester resin, a thermoplastic polyester elastomer, a thermoplastic polyamide resin, a thermoplastic polyamide elastomer, a thermoplastic polyurethane resin, and a thermoplastic polyurethane elastomer. Or, the hinge sheet 3 is preferably formed as a fabric of a polyester resin and/or a polyamide resin, or a laminate sheet made of a sheet formed of the fabric and at least one selected from a thermoplastic polyester resin, a thermoplastic polyester elastomer, a thermoplastic polyamide resin, a thermoplastic polyamide elastomer, a thermoplastic polyurethane resin, and a thermoplastic polyurethane elastomer.

The protective layer 4 may be a layer for suppressing so-called "blistering" that is foaming on a laser-marked portion due to laser beam energy irradiation.

### <Laminate for plastic cards>

The laminate for plastic cards according to the present disclosure includes the foregoing multilayer film for laser marking. The laminate for plastic cards according to the present disclosure preferably includes the multilayer film for laser marking as a surface material. Examples of plastic cards include an ID card, a cash card, a credit card and a tag.

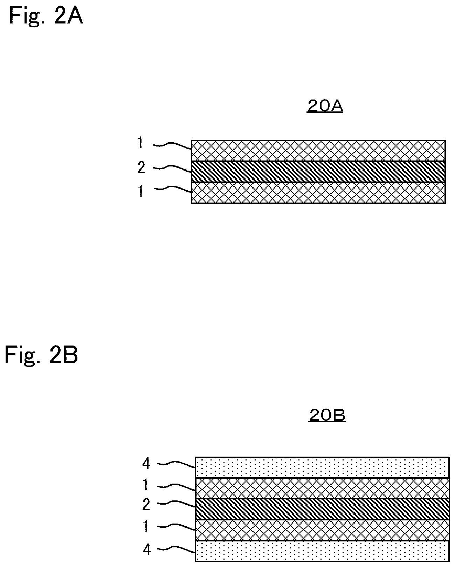

As the structure of the laminate for plastic cards, specifically, a three-layer laminate 20A formed of multilayer film for laser marking 1/sheet for a core 2/multilayer film for laser marking 1 shown in Fig. 2A, or a five-layer laminate 20B formed of protective layer 4/multilayer film for laser marking 1/sheet for a core for 2/ multilayer film for laser marking 1/protective layer 4 shown in Fig. 2B is preferable.

The sheet for a core 2 in the laminate for plastic cards is the same as the foregoing except that the total thickness thereof is preferably 400 to 700 µm. The protective layer 4 is the same as the foregoing.

### <Film for plastic cards>

The film for plastic cards according to the present disclosure includes: a layer (X) at least as an outermost layer, the layer (X) being made from a resin composition (x) containing the bisphenol-based polycarbonate (A) and a polyester copolymer (B), the polyester copolymer (B) including a UV absorbent group; and at least one layer (Y) made from the resin composition (y) containing the bisphenol-based polycarbonate (A) and the laser beam energy absorber (C).

"Bisphenol-based polycarbonate (A)" is the same as that in the foregoing multilayer film for laser marking.

"The polyester copolymer (B) including a UV absorbent group" is not particularly limited as long as a UV absorbent group is included in the structure of the polyester copolymer. As the UV absorbent group, a benzotriazole group, a benzophenone group, a salicylate group, an oxanilide group, a diphenylcyanoacrylate group, a triazine group, a salicylic acid group, a cyanoacrylate group, etc. are given. The UV absorbent group may be preferably a benzotriazole group, a benzophenone group, or a triazine group; and may be preferably a benzotriazole group. The UV absorbent group may be preferably a residue from the polycondensation of the compound of the general formula (1) having a benzotriazole group.

The resin composition (x) may be preferably the same as the resin composition (x) constituting the layer (X) of the foregoing multilayer film for laser marking.

The laser beam energy absorber (C) is the same as that in the multilayer film for laser marking.

The resin composition (y) may be preferably the same as the resin composition (y) forming the layer (Y) of the multilayer film for laser marking.

### <Plastic card>

The plastic card according to the present disclosure includes the foregoing film for plastic cards. The plastic card according to the present disclosure preferably includes the film for plastic cards as a surface material. Examples of the plastic card include an ID card, a cash card, a credit card and a tag.

The structure of the plastic card is the same as that in the foregoing laminate for plastic cards.

### <Data Sheet for e-passports>

The data sheet for e-passports according to the present disclosure includes: at least one layer (X) made from a resin composition (x), the resin composition (x) containing the bisphenol-based polycarbonate (A) and the polyester copolymer (B), the polyester copolymer (B) including a UV absorbent group; at least one layer (Y) made from the resin composition (y) containing the bisphenol-based polycarbonate (A) and the laser beam energy absorber (C); and a hinge sheet layer (Z).

The layer (X) and the layer (Y) are the same as those in the foregoing film for plastic cards. "Hinge sheet layer (Z)" is the same as "hinge sheet" in the foregoing laminate for e-passports.

As long as the data sheet for e-passports has the foregoing structure, the structure of the data sheet for e-passports other than the foregoing is not particularly limited. For example, the data sheet for e-passports may have the same structure as the foregoing laminate for e-passports, and further specifically, may have the structure shown in Fig. 1A or 1B.

### <E-passport>

The e-passport according to the present disclosure includes the foregoing data sheet for e-passports. Specifically, the e-passport according to the present disclosure further includes a cover, visa pages, etc. for passports, and is such that the hinge sheet layer (Z) in the foregoing data sheet for e-passports and these pages, etc. are bound to be integrated.

### [Examples]

The following are examples. These examples do not limit the present application at all.

### <Evaluation methods>

Films obtained in the examples and comparative examples were evaluated by the following methods.

### (1) Laser chromogenicity

Marking was carried out on the films obtained in the examples and comparative examples by irradiation with a YAG laser beam for marking (1064 nm in wavelength) using CLM-20 manufactured by NIDEC COPAL CORPORATION. Marking was carried out at 64 µm/Step × 50%. The mark density in the obtained marked films was evaluated.
A: high mark density, no blistering or deformation, and good visibility
B: low mark density, or blistering or deformation, and poor visibility.

### (2) Resistance to discoloration due to ultraviolet rays

The chromaticity of the films obtained in the examples and comparative examples (L*a*b* color coordinate system) was measured by a spectrophotometer manufactured by KONICA MINOLTA JAPAN, INC. Next, the films were irradiated with ultraviolet rays for 100 hours using EYE SUPER UV TESTER SUV-W151 from IWASAKI ELECTRIC CO., LTD. under the conditions of: 75 mW/cm² in irradiation intensity; 53°C in irradiation temperature; and 50%RH in irradiation humidity. Thereafter, the L*a*b* values were measured in the same manner. The color difference ΔE between the chromaticity before and after the irradiation with ultraviolet rays was evaluated based on the following criteria. Table 1 also shows the obtained values of ΔE.
A: No or a little visually-recognized discoloration (ΔE < 10)
B: much visually-recognized discoloration (ΔE ≥ 10)

### (3) Ultraviolet durability

The films obtained in the examples and comparative examples were irradiated with ultraviolet rays for 100 hours using EYE SUPER UV TESTER SUV-W151 from IWASAKI ELECTRIC CO., LTD. under the conditions of: 75 mW/cm² in irradiation intensity; 53°C in irradiation temperature; and 50% RH in irradiation humidity. Thereafter, the films were folded by hand and it was confirmed whether the films cracked.
A: not cracked even if folded
B: cracked when folded

### (4) Contamination of equipment

In each of the examples and comparative examples, it was visually confirmed whether there were any deposits in equipment around a T-die after 3 hours had passed since T-die melt extrusion molding.
A: no deposits visually recognizable
B: presence of any deposits visually recognizable

### <Materials>

The materials used in each of the examples and comparative examples were as follows.

### (Bisphenol-based polycarbonate (A))

(A)-1: polycarbonate resin (polycarbonate by the interfacial polymerization method, weight average molecular weight: approximately 53000)

### (Polyester (B))

(B)-1: acid component: terephthalic acid = 100 mol%, diol component: 1,4-butanediol/2,2-methylenebis[4-(2-hydroxyethyl)-6-(2H-benzotriazole-2-yl)phenol] = 83.5/16.5 mol%)

### (Laser beam energy absorber (C))

(C)-1: bismuth-neodymium metal oxide (average particle size: 1 to 3 µm)

### (Transesterification inhibitor (D))

(D)-1: alkyl acid phosphate

### <Example 1>

As the layer (X), (A)-1, (B)-1 and (D)-1 were dry-blended at a mass ratio of 69.955:30:0.045, to be extruded at 240°C as a first layer and a third layer (both outer layers) via a two-kinds three-layer multi-manifold type lip using an extruder. At the same time, as the layer (Y), (A)-1 and (C)-1 blended at a mass ratio of 99.75:0.25 were extruded at 240°C as a second layer (middle layer) via a lip of the same type. At this time, the discharge rate of the molten resins was adjusted so that the thicknesses of the layers were: first layer/second layer/third layer = 8/34/8 (µm). Next, this coextruded sheet was rapidly cooled at a casting roll at approximately 120°C, so that a multilayer film was obtained. The results of the evaluation on the obtained multilayer film are shown in Table 1.

### <Example 2>

A multilayer film was made in the same manner as in example 1 except that the mixing mass ratio of (A)-1, (B)-1 and (D)-1 for the first layer and the third layer in example 1 was changed to 93.955:6:0.045, to be evaluated. The results are shown in Table 1.

### <Example 3>

A multilayer film was made in the same manner as in example 1 except that the mixing mass ratio of (A)-1, (B)-1 and (D)-1 for the first layer and the third layer in example 1 was changed to 96.955:3:0.045, to be evaluated. The results are shown in Table 1.

### <Comparative example 1>

A multilayer film was made in the same manner as in example 1 except that (B)-1 and (D)-1 for the first layer and the third layer were not blended, to be evaluated. The results are shown in Table 1.

### <Comparative example 2>

(A)-1, (B)-1 and (C)-1 blended at a mass ratio of 96.85:3:0.15 were extruded at 240°C via a lip for a single-layer using an extruder so as to have a thickness of 50 µm. Next, this single-layer sheet was rapidly cooled at a casting roll at approximately 140°C, so that a single-layer film was obtained. The results of the evaluation on the obtained single-layer film are shown in Table 1.

### <Comparative example 3>

(A)-1, (B)-1 and (C)-1 were blended at a mass ratio of 96.75:3:0.25 so that a film was made in the same manner as in comparative example 2, and laser chromogenicity and contamination of equipment thereof were evaluated. The evaluation results are shown in Table 1.

### <Comparative Example 4>

Tinuvin 1577 manufactured by BASF SE was used instead of (B)-1. (A)-1, (C)-1 and Tinuvin 1577 were blended at a mass ratio of 98.95:0.15:0.9 so that a film was made in the same manner as in comparative example 2, and the foregoing evaluations were each carried out thereon. The evaluation results are shown in Table 1.

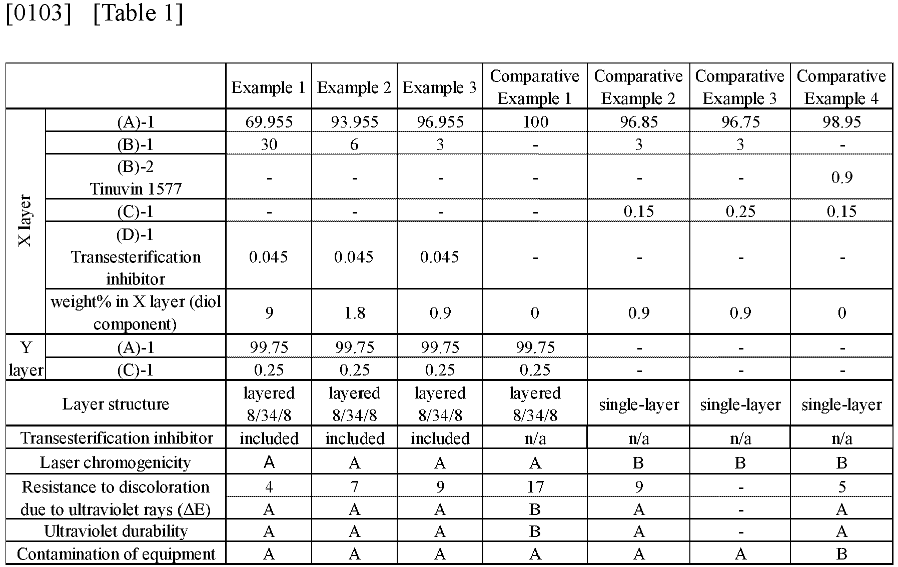

The film of comparative example 1, where the X layer did not contain the polyester (B), was inferior in resistance to discoloration due to ultraviolet rays, and ultraviolet durability since the X layer did not absorb ultraviolet rays. The film of comparative example 2, which was a single-layer film containing the polycarbonate (A), the polyester (B) and the laser beam energy absorber (C), was inferior in laser chromogenicity. The film of comparative example 3, which was a single-layer film containing a little more amount of the laser beam energy absorber (C), was also inferior in laser chromogenicity. The film of comparative example 4, which was a single-layer film containing the polycarbonate (A), an ultraviolet absorber (Tinuvin 1577) and the laser beam energy absorber (C), was inferior in laser chromogenicity, and led to contamination of equipment.

The multilayer films of examples 1 to 3 were superior in laser chromogenicity, resistance to discoloration due to ultraviolet rays, and ultraviolet durability, and further, did not lead to contamination of equipment. These results show that the multilayer film for laser marking according to the present disclosure is preferably used as an e-passport or an ID card that is required to have good laser chromogenicity in order to prevent forgery, and is required to have ultraviolet durability in order to enable long-term use.

### [Reference Signs List]

1: multilayer film for laser marking
2: sheet for a core
3: hinge sheet
4: protective layer
10a, 10b: laminate for e-passports
20a, 20b: laminate for plastic cards

## Claims

1. A multilayer film for laser marking, the multilayer film comprising:
a layer (X) at least as an outermost layer, the layer (X) being made from a resin composition, the resin composition containing a bisphenol-based polycarbonate (A) and a polyester (B), the polyester (B) containing a compound of the following general formula (1) as a diol component, the resin composition containing the compound of the following general formula (1) in an amount of 0.1 to 20 mass%; and
at least one layer (Y) made from a resin composition, the resin composition containing the bisphenol-based polycarbonate (A) and a laser beam energy absorber (C).

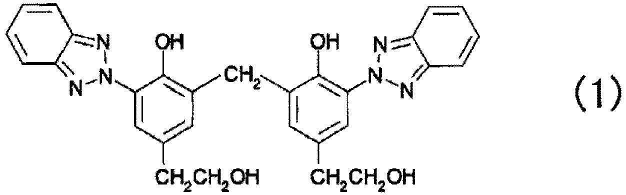

2. The multilayer film for laser marking according to claim 1,
wherein the polyester (B) contains an aromatic dicarboxylic acid as a major constituent of a dicarboxylic acid component in the polyester (B), and 1,4-butanediol in an amount of 50 mol% to 95 mol% on the basis of the total diol component.

3. The multilayer film for laser marking according to claim 1 or 2, wherein the layer (X) contains a transesterification inhibitor.

4. A laminate for e-passports, the laminate comprising: the multilayer film for laser marking according to any one of claims 1 to 3.

5. A laminate for plastic cards, the laminate comprising: the multilayer film for laser marking according to any one of claims 1 to 3.

6. A film for plastic cards, the film comprising:
a layer (X) at least as an outermost layer, the layer (X) being made from a resin composition, the resin composition containing a bisphenol-based polycarbonate (A) and a polyester copolymer (B), the polyester copolymer (B) including a UV absorbent group; and
at least one layer (Y) made from a resin composition, the resin composition containing the bisphenol-based polycarbonate (A) and a laser beam energy absorber (C).

7. A plastic card comprising: the film for plastic cards according to claim 6.

8. A data sheet for e-passports, the data sheet comprising:
at least one layer (X) made from a resin composition, the resin composition containing a bisphenol-based polycarbonate (A) and a polyester copolymer (B), the polyester copolymer (B) including a UV absorbent group;
at least one layer (Y) made from a resin composition, the resin composition containing the bisphenol-based polycarbonate (A) and a laser beam energy absorber (C); and
a hinge sheet layer (Z).

9. An e-passport comprising the data sheet for e-passports according to claim 8.
